# EUROPEAN PATENT APPLICATION

(11) **EP 2 660 708 A2**
(43) Date of publication of application: **06.11.2013**
(21) Application number: 13166029.2
(22) Date of filing: 30.04.2013
(51) Int. Cl.: G06F 3/12

(54) **Data generating apparatus, data generating method, and storage medium**

(30) Priority: 02.05.2012 JP 2012105241
(71) Applicant: Fujifilm Corporation, Minato-ku Tokyo 106-8620 (JP)
(72) Inventor: Watanabe, Hiromichi, Tokyo 107-0052 (JP); Seto, Satoshi, Tokyo 107-0052 (JP); Kuranoshita, Masashi, Tokyo 107-0052 (JP); Hayashi, Yuichiro, Tokyo 107-0052 (JP)
(74) Representative: Klunker . Schmitt-Nilson . Hirsch

(57) **Abstract**

At least two types of variable layers (212 through 215, 222 through 225, 232 through 235) and at least one type of fixed layer (211, 221, 231) are designated from among three or more types of layers (211 through 215, 221 through 225, 231 through 235). The same number of layer clusters (240e, 240f, 240g, 240s), which are made up of a plurality of pages, as the number of types of variable layers (212 through 215, 222 through 225, 232 through 235) are defined by adding the variable layers (212 through 215, 222 through 225, 232 through 235) to the designated at least one type of fixed layer (211, 221, 231).

## Description

### BACKGROUND OF THE INVENTION

### Field of the Invention:

The present invention relates to a data generating apparatus, a data generating method, and a storage medium for generating printing data from page description data, depending on a plurality of productions that share certain content information.

### Description of the Related Art:

Recently, the workflow of printing processes has been digitized as a whole in view of the widespread use of DTP (Desktop Publishing) and CTP (Computer To Plate) processes. In particular, various technologies in relation to versioning have been proposed in the art as processes for efficiently producing a plurality of productions that share certain content information.

Japanese Laid-Open Patent Publication No. 2005-310115 discloses an apparatus for assigning master data and variable data to input systems for continuous tone and line work, as well as for superposing image data of the two systems and outputting the superposed image data.

Japanese Laid-Open Patent Publication No. 2010-128941 discloses an apparatus and method for analyzing a script, which is descriptive of first page data. If the first page data agree with second page data already stored in a storage medium, the first page data are kept in an unprocessed state, whereas the second page data, which have been processed by a raster image processor (RIP), are reused.

### SUMMARY OF THE INVENTION

For generating a plurality of productions, such as manuals written in multiple languages, for example, it is convenient for the operator to use a layer function of page description data, because the layer function allows content information to be contained in one data file, thus resulting in a reduction in the number of man-hours required for file management. It is assumed that the common content information is stored in one layer, whereas different content information for different productions is stored in other layers.

However, the apparatus and method disclosed in Japanese Laid-Open Patent Publication No. 2005-310115 and Japanese Laid-Open Patent Publication No. 2010-128941 are unable to recognize whether or not the above-described page description data includes content information concerning a plurality of productions. Thus, an operator has to select and set combinations of layers, which are suitable for the productions, by entering certain actions through a user interface. Such a procedure is a highly tedious and time-consuming task to perform.

It is an object of the present invention to provide a data generating apparatus, a data generating method, and a storage medium, which are capable of significantly increasing the efficiency at which page description data having a layer function are edited.

According to the present invention, there is provided a data generating apparatus for generating printing data from page description data, depending on a plurality of productions that share content information, comprising a layer identifier for identifying three or more types of layers, which are common to a plurality of pages represented by the page description data, a layer designator for designating at least two types of variable layers and at least one type of fixed layer from among the three or more types of layers identified by the layer identifier, a layer cluster definer for defining the same number of layer clusters, which are made up of the plurality of pages, as the number of types of variable layers, by adding the variable layers to the at least one type of fixed layer designated by the layer designator, and a printing data generator for generating printing data for each of the layer clusters defined by the layer cluster definer.

Since at least two types of layers and at least one type of layer are designated from among three or more types of layers, and the various layers are added to the designated at least one type of layer, thereby defining the same number of layer clusters, which are made up of a plurality of pages, as the number of types of variable layers, a layer cluster in terms of each of assumed productions can automatically be produced, depending on the manner in which the variable and fixed layers are designated. Thus, the efficiency at which page description data having a layer function are edited can be significantly increased.

The data generating apparatus preferably further comprises an image generator for generating a layer model image for making visible a hierarchical structure of the layer clusters for each of the productions, by producing a stack, along one direction, of successive block-like objects depending on the types of layers.

The image generator preferably further generates thumbnail images, which make overlapping images visible in a hierarchical level and a hierarchical level therebeneath, in response to an action to designate a first hierarchical level within the hierarchical structure represented by the layer model image.

The data generating apparatus preferably further comprises a display unit for displaying the layer model image generated by the image generator.

The layer identifier preferably identifies types of layers based on a similarity of names of the layers.

The layer identifier preferably identifies types of layers within a page range designated by a predetermined action among the plurality of pages.

The layer designator preferably designates at least two types of layers, which are selected as the variable layers in response to a predetermined action, and further designates at least one type of layer that is not selected, as the fixed layer.

According to the present invention, there also is provided a data generating method for generating printing data from page description data, depending on a plurality of productions that share content information, comprising the steps of identifying three or more types of layers, which are common to a plurality of pages represented by the page description data, designating at least two types of variable layers and at least one type of fixed layer from among the identified three or more types of layers, defining the same number of layer clusters, which are made up of the plurality of pages, as the number of types of variable layers, by adding the variable layers to the designated at least one type of fixed layer, and generating printing data for each of the defined layer clusters.

According to the present invention, there further is provided a non-transitory storage medium storing therein a program for generating printing data from page description data, depending on a plurality of productions that share content information, the program enabling a computer to carry out the steps of identifying three or more types of layers, which are common to a plurality of pages represented by the page description data, designating at least two types of variable layers and at least one type of fixed layer from among the identified three or more types of layers, defining the same number of layer clusters, which are made up of the plurality of pages, as the number of types of variable layers, by adding the variable layers to the designated at least one type of fixed layer, and generating printing data for each of the layer clusters.

With the data generating apparatus, the data generating method, and the storage medium according to the present invention, since at least two types of layers and at least one type of layer are designated from among three or more types of layers, and the various layers are added to the designated at least one type of layer, thereby defining the same number of layer clusters, which are made up of a plurality of pages, as the number of types of variable layers, a layer cluster in terms of each of assumed productions can automatically be produced, depending on the manner in which the variable and fixed layers are designated. Thus, the efficiency at which page description data having a layer function are edited can be significantly increased.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a block diagram of a print production system incorporating a raster image processor (RIP) as a data generating apparatus according to an embodiment of the present invention;
FIG. 2 is an electric block diagram of the RIP shown in FIG. 1;
FIG. 3 is a flowchart of an operation sequence of the RIP shown in FIGS. 1 and 2;
FIG. 4 is a view showing a setting screen by way of example;
FIG. 5A is a front elevational view showing an example of the layout of content information to be printed;
FIG. 5B is a view showing a layer structure for realizing the layout shown in FIG. 5A;
FIG. 6 is a view showing page description data made up of a plurality of pages;
FIG. 7 is a view showing a designating screen by way of example;
FIG. 8 is a view showing another setting screen by way of example;
FIG. 9 is a view showing four layer clusters, which are produced by editing the layer structure shown in FIG. 6;
FIG. 10 is a view showing another designating screen by way of example; and
FIG. 11 is a view showing still another designating screen by way of example.

### DESCRIPTION OF THE PREFERRED EMBODIMENTS

Like or corresponding parts are denoted by like or corresponding reference characters throughout the views.

A data generating method according to a preferred embodiment of the present invention, in relation to a data generating apparatus, a storage medium, and a print production system for carrying out the data generating method, will be described in detail below with reference to the accompanying drawings.

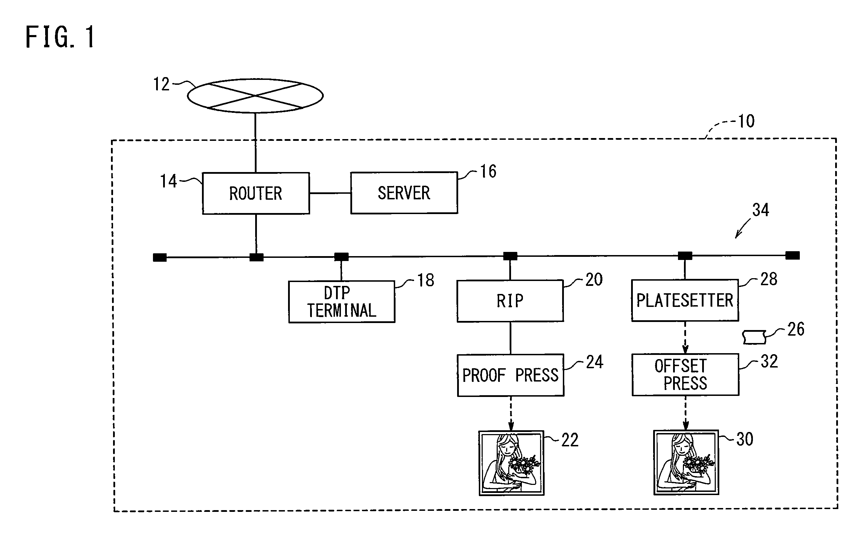

FIG. 1 shows in block form a print production system 10 incorporating a raster image processor (RIP) 20 as a data generating apparatus according to an embodiment of the present invention.

As shown in FIG. 1, the print production system 10 includes a router 14 as a device connected to a network 12, a server 16 accessible through the network 12 from terminal devices, not shown, that belong to external networks, a DTP (Desktop Publishing) terminal 18 for performing a DTP process including a process of editing content data acquired from the server 16 or the like, a raster image processor (RIP) 20 (data generating apparatus) for performing various image processing techniques such as a rasterizing process, a color conversion process, etc., on proofread data or platemaking data generated by the DTP terminal 18, a proof press 24 for printing a proof 22 as a print based on proofread data sent from the RIP 20, a platesetter 28 for producing printing plates 26 based on platemaking data sent from the RIP 20, an offset press 32 for printing a print 30 with printing plates 26 that are mounted in the offset press 32.

The server 16 is a core device for implementing work flow management in the print production system 10. The server 16 is connected through the router 14 and the network 12 for communication with terminal devices of at least one of designers and production companies, not shown. The server 16 also is connected for communication with the DTP terminal 18, the RIP 20, and the platesetter 28, through a LAN (Local Area Network) 34 that makes up part of the print production system 10.

The server 16 is arranged to perform a function as a file server for storing and transferring various data files, a function as an authority management server for managing task authorities that can be carried out by terminals, users, or printing jobs, and a function as a mail server for generating and distributing notice mails at given timings such as the start and end of various processes. The various data files that can be managed by the server 16 as the file server include content data files, proof data files, platemaking data files, job ticket files, e.g., JDF (Job Definition Format) files, ICC (International Color Consortium) profiles, color sample data files, etc.

The DTP terminal 18 generates edited data per page from content data representative of characters, figures, patterns, pictures, etc., which have been processed by a preflight process. The DTP terminal 18 also performs designated processes including an imposing process according to a binding process, and a page folding process, by referring to tag information of a job ticket.

The RIP 20 functions as a print processing server for at least one printing press. In FIG. 1, the RIP 20 is connected for communication with the proof press 24 and the platesetter 28. The RIP 20 converts data described in a page description language (hereinafter referred to as "page description data Dp") into printing data suitable for an output press, and supplies the printing data to the proof press 24 or the platesetter 28.

Page description language (PDL) refers to a language for describing image information including format information, position information, and color information (including density information) of graphics, etc., in a "page" that serves as an output unit for printing, displaying, etc. Page description languages include, for example, PDF which stands for "Portable Document Format" and is prescribed according to ISO32000-1:2008, PostScript (registered trademark of AdobeSystems), and XPS (XML Paper Specification). The page description data Dp according to the present embodiment can express page renderings by superposing a plurality of layers.

The proof press 24 prints a proof 22 based on printing data supplied from the RIP 20. The proof press 24 may comprise a DDCP (Direct Digital Color Proofer), an ink jet color proofer, a low-resolution color laser printer (electrophotographic printer), an ink jet printer, or the like.

The offset press 32 applies inks to a print medium 35 (recording medium) through printing plates 26 and intermediate transfer mediums, not shown, in order to produce a print 30. The offset press 32 may be replaced with a digital printing press for direct printing. The digital printing press may comprise an ink jet color proofer, a color laser printer (electrophotographic printer), or the like.

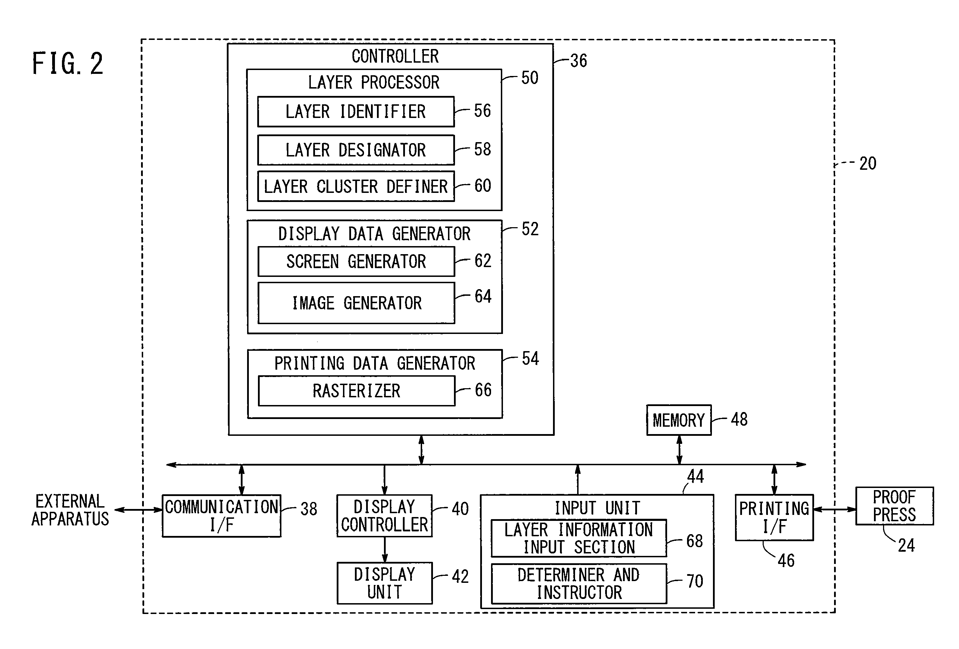

FIG. 2 is an electric block diagram of the RIP 20 shown in FIG. 1. The RIP 20 comprises a computer including a controller 36, a communication I/F 38, a display controller 40, a display unit 42, an input unit 44, a print I/F 46, and a memory 48 (storage medium).

The communication I/F 38 is an interface for sending electric signals to and receiving electric signals from various external apparatus. For example, the communication I/F 38 can acquire various items of information such as proof data, platemaking data, ICC profiles, etc., which are managed and saved in the server 16 (see FIG. 1).

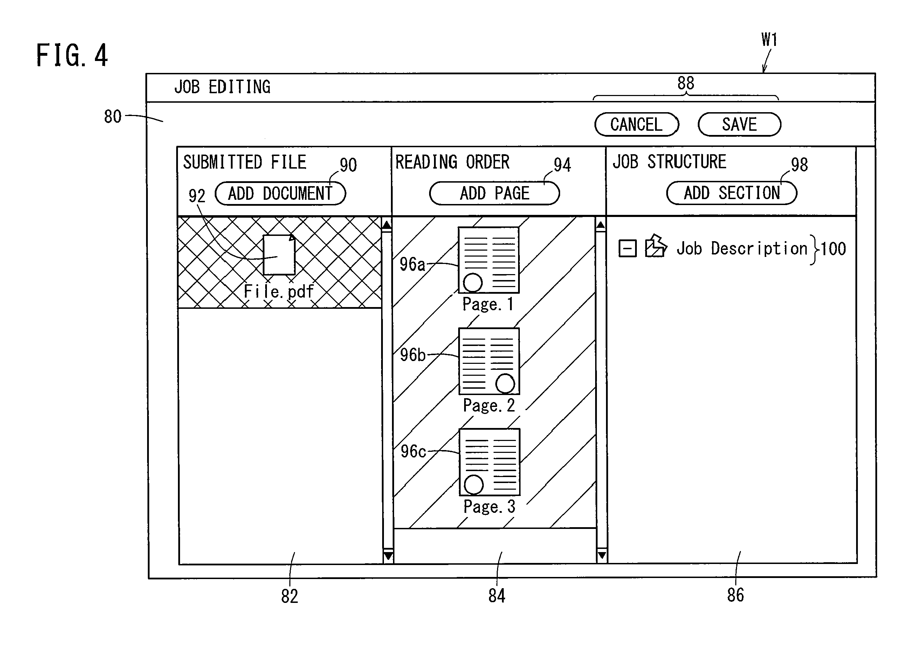

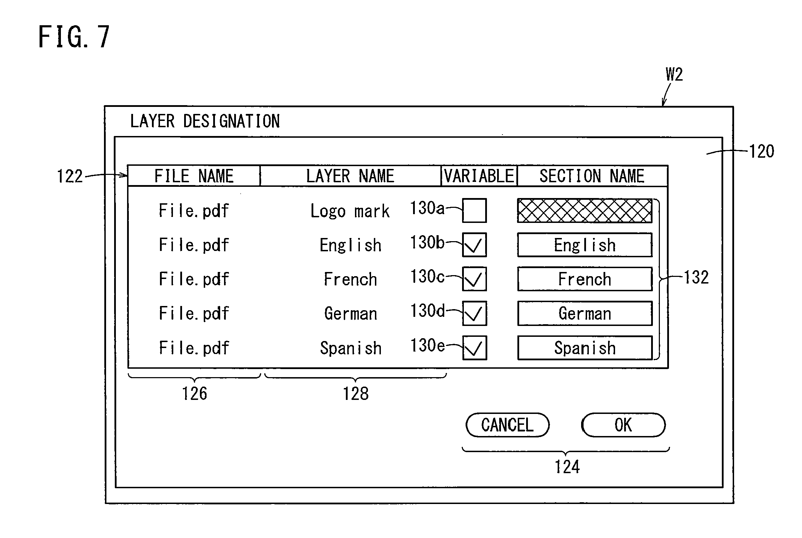

The display controller 40 comprises a control circuit for controlling the display unit 42 under the control of the controller 36. More specifically, in a case where the display controller 40 outputs a display control signal to the display unit 42 via a non-illustrated I/F, the display unit 42 is energized to display various images including a window W1 (see FIG. 4) and a window W2 (see FIG. 7).

The print I/F 46 is an interface for sending electric signals representing printing data to the proof press 24, which prints a desired proof 22.

The memory 48 stores programs and data, which are required for the controller 36 to control various components. The memory 48 may comprise a non-transitory computer-readable recording medium such as a nonvolatile memory, a hard disk, or the like.

The controller 36 comprises a processor such as a CPU (Central Processing Unit) or the like. The controller 36 performs various routines to function as a layer processor 50, a display data generator 52, and a printing data generator 54, by reading and executing programs stored in the memory 48.

The layer processor 50 performs various layer processing routines (hereinafter referred to as "layer processes") on the page description data Dp in order to reconstruct a layer structure of the data description data Dp. More specifically, the layer processor 50 includes a layer identifier 56 for identifying three or more types of layers common to a plurality of pages, a layer designator 58 for designating the types of variable and fixed layers from among the identified three or more types of layers, and a layer cluster definer 60 for defining layer clusters, which are produced by combining the designated types of variable and fixed layers according to prescribed rules.

The display data generator 52 includes a screen generator 62 for generating a setting screen 80 (see FIG. 4, etc.) and a designating screen 120 (see FIG. 7, etc.), and an image generator 64 for generating an image (hereinafter referred to as a "layer model image 150"), which provides a visible representation of the layer structure of each production.

The printing data generator 54 generates printing data representing a proof 22 or a print 30 by performing a desired image processing technique on the page description data Dp. The printing data generator 54 includes a rasterizer 66 for performing a rasterizing process on the page description data Dp. The rasterizing process includes a data format converting process for converting data from a PDL format into a raster format, and a color matching process using ICC profiles.

The input unit 44 comprises various input devices including a mouse, a track ball, a keyboard, etc. The input unit 44 functions as a layer information input section 68 for inputting various information concerning layers (hereinafter referred to as "layer information"), and a determiner and instructor 70 for determining and instructing the content of a layer process to be performed by the layer processor 50.

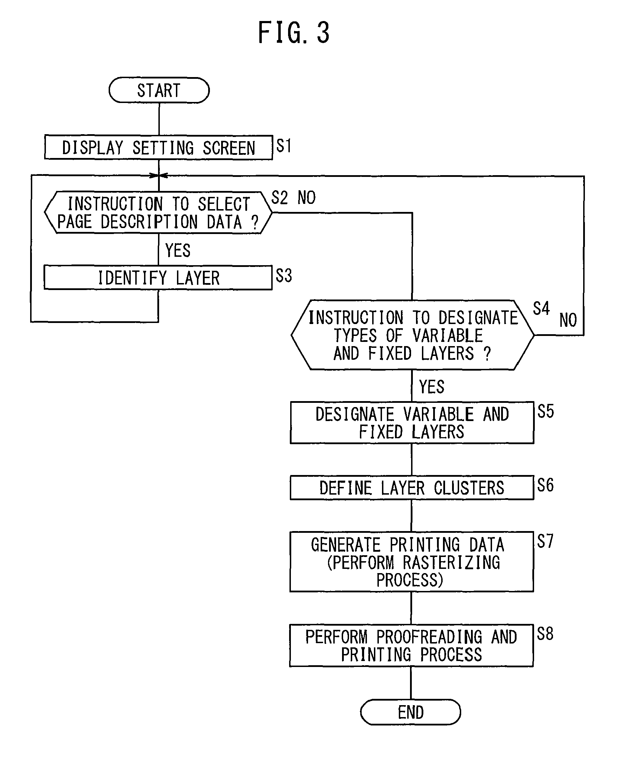

The RIP 20, which serves as a data generating apparatus according to the present embodiment, is basically constructed as described above. Operations of the RIP 20 will be described in detail below with reference to the flowchart shown in FIG. 3.

In step S1, the RIP 20 displays a setting screen 80, which is used for making settings for printing. In response to an instruction to begin making settings, the screen generator 62 generates display data for a setting screen 80, and then supplies the generated display data to the display controller 40. The display controller 40 controls the display unit 42 to display a window W1, which includes the setting screen 80 therein.

As shown in FIG. 4, the setting screen 80 includes a file designating field 82, a page designating field 84, a job structure list 86, and a button group 88. The button group 88, especially the "SAVE" button, functions as the determiner and instructor 70 for determining and instructing content of a layer process.

In step S2, the layer processor 50 judges whether or not an instruction has been made to select page description data Dp through the setting screen 80. More specifically, the layer processor 50 judges whether or not a given action has been triggered in a case where the operator clicks on the button 90 provided in the upper portion of the file designating field 82. In the illustrated embodiment, it is assumed that page description data Dp having a data file name "File.pdf" have been selected in response to a given action. At this time, an icon 92 simulating the data file is displayed at a predetermined position in the file designating field 82.

Furthermore, the operator can designate a page range to which the layer process is applied by clicking on a button 94 that is present in an upper portion of the page designating field 84. In the illustrated embodiment, the designated page range covers first through third pages, thumbnail images 96a, 96b, 96c of which are displayed in a vertical array in the page designating field 84.

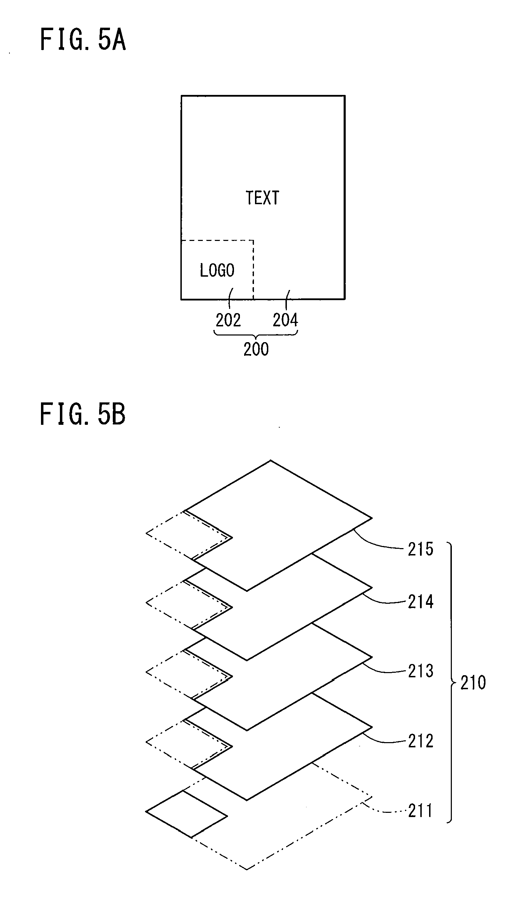

In step S3, the layer identifier 56 identifies the type of layer that is common to the pages represented by the page description data Dp designated in step S2. An exemplary configuration of the page description data Dp will be described below with reference to FIGS. 5A through 6.

FIG. 5A is a front elevational view showing an example of the layout of content information that is to be printed. As shown in FIG. 5A, a page area 200 having a size common to first through third pages includes a logo area 202 in a portion thereof, and a text area 204 in the remainder thereof. It is assumed that the logo area 202 on the first and third pages is positioned in the lower left corner of the page area 200, whereas the logo area 202 on the second page is positioned in the lower right corner of the page area 200.

The text area 204 contains text information according to one of the languages English, French, German, and Spanish. The logo area 202 contains a common logo mark regardless of the language used.

FIG. 5B is a view showing a layer structure for realizing the layout shown in FIG. 5A. The first page is represented by page data 210 including a first layer 211 having a layer name (hereinafter referred to as a "name") "Logo mark", a second layer 212 having a name "English", a third layer 213 having a name "French", a fourth layer 214 having a name "German", and a fifth layer 215 having a name "Spanish", which are stacked together and arranged successively upward.

The first layer 211 has an area, indicated by the solid lines, corresponding to the logo area 202 (see FIG. 5A), in which layer data representative of the logo pattern are present. The second through fifth layers 212 through 215 have respective areas, indicated by the solid lines, corresponding to the text area 204 (see FIG. 5A), in which layer data representative of text expressed in respective languages is present. By using the layer function of the page description data Dp in this manner, it is possible for content information to be contained in one data file for improved file management.

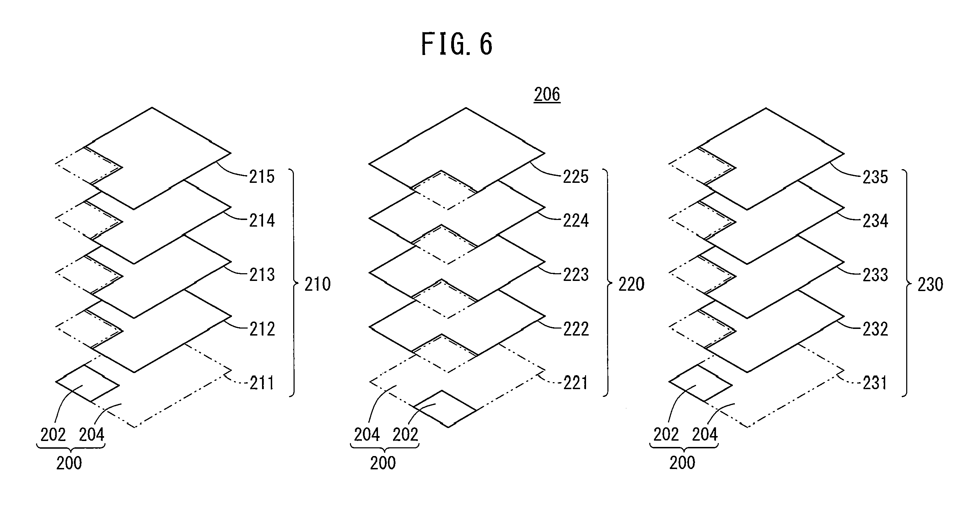

As shown in FIG. 6, the page description data Dp (layer structure 206) includes three page data 210, 220, 230. Page data 220 and 230 have a layer structure similar to the layer structure of the page data 210 (see FIG. 5B). More specifically, the page data 220, which represents the second page, includes a first layer 221 having the name "Logo mark", a second layer 222 having the name "English", a third layer 223 having the name "French", a fourth layer 224 having the name "German", and a fifth layer 225 having the name "Spanish", which are stacked together and arranged successively upward. The page data 230, which represents the third page, includes a first layer 231 having the name "Logo mark", a second layer 232 having the name "English", a third layer 233 having the name "French", a fourth layer 234 having the name "German", and a fifth layer 235 having the name "Spanish", which are stacked together and arranged successively upward.

With the exemplary configuration shown in FIG. 6, the layer identifier 56 identifies five types of layers that are common to each page of the page description data Dp, i.e., "Logo mark", "English", "French", "German", and "Spanish".

Alternatively, the layer identifier 56 may identify types of layers based on similarity of the names of the layers. For example, if the first layers 211, 221 have the name "Logo mark" and the third layer 231 has the name "Logo Mark", then the layer identifier 56 identifies the first layers 211, 221, 231 as being of the same type, because the names thereof are similar although the alphabetical letters "M" and "m" are different. Identification of the layer names based on such similarity makes the data generating apparatus robust in relation to descriptive variations, thereby enabling higher operation efficiency.

The layer identifier 56 may identify types of layers within a page range designated by a certain action among a plurality of pages. In the illustrated embodiment, since a range of first through third pages is designated, the layer identifier 56 identifies types of layers within the designated range.

Returning to step S2, the layer processor 50 judges whether or not a further instruction has been made to select page description data Dp. If the operator clicks on the buttons 90, 94 in the setting screen 80 (see FIG. 4) in order to change data files or page ranges, then in step S3, the layer identifier 56 identifies layers each time that such a change is made. If the layer processor 50 determines that no instruction has been made to select page description data Dp, then control proceeds to step S4.

In step S4, the layer processor 50 judges whether or not an instruction has been made to designate the types of variable and fixed layers from among the three or more types of layers identified in step S3.

In a case where the operator clicks on the button 98 provided in the upper portion of the job structure list 86 (see FIG. 4), the screen generator 62 generates display data for a designating screen 120, and then supplies the generated display data to the display controller 40. The display controller 40 controls the display unit 42 to display a window W2 that includes the designating screen 120 therein.

As shown in FIG. 7, the designating screen 120 includes a designating field 122 for designating the types of variable layers, etc., and a button group 124. The designating field 122 includes a small field 126 that indicates file names for the page description data Dp, a small field 128 that indicates names of layers, five check boxes 130a through 130e for designating or canceling the types of variable layers, and a text box group 132 for indicating names of layer clusters.

The check boxes 130a through 130e, the text box group 132, and the button group 124 function as the layer information input section 68 (see FIG. 2) for inputting various layer information. In a case where the operator ticks the four check boxes 130b through 130e and then clicks on the "OK" button of the button group 124, for example, the window W2 (see FIG. 7) is closed, and the content of the job structure list 86 on the setting screen 80 shown in FIG. 4 is updated.

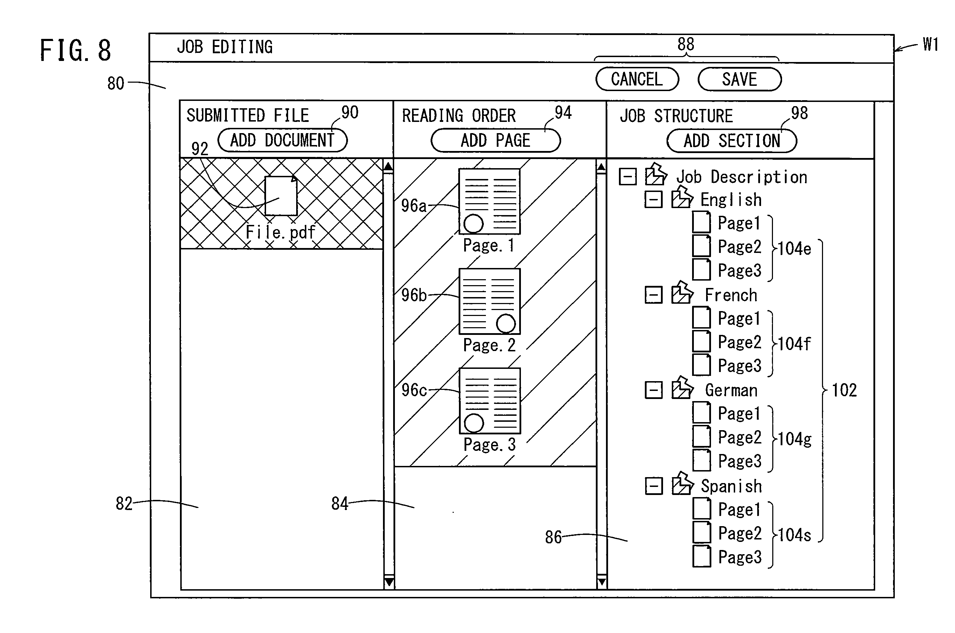

As shown in FIG. 8, at this time, the job structure list 86 displays a hierarchical diagram 102 that differs from the hierarchical diagram 100 in the job structure list 86 shown in FIG. 4. The hierarchical diagram 102, which is expressed by way of a tree structure, comprises page structure diagrams 104e, 104f, 104g, 104s for respective sections, the names of which are input through the text box group 132 (see FIG. 7).

The layer processor 50 judges whether or not the operator has clicked on the button group 88, especially the "SAVE" button, on the setting screen 80 (see FIGS. 4 and 8). If the layer processor 50 determines that the operator has not clicked on the button group 88, then control returns to step S2, and steps S2 through S4 are repeated. If the layer processor 50 determines that the operator has clicked on the button group 88, control proceeds to step S5.

In step S5, based on the instruction in step S4, the layer designator 58 designates at least two types of layers and at least one type of layer. More specifically, the layer designator 58 designates four types of layers, i.e., the layers "English", "French", "German", and "Spanish", which are selected by actions on the designating screen 120, as variable layers. The layer designator 58 also designates an unselected type of layer, i.e., the layer "Logo mark", as a fixed layer.

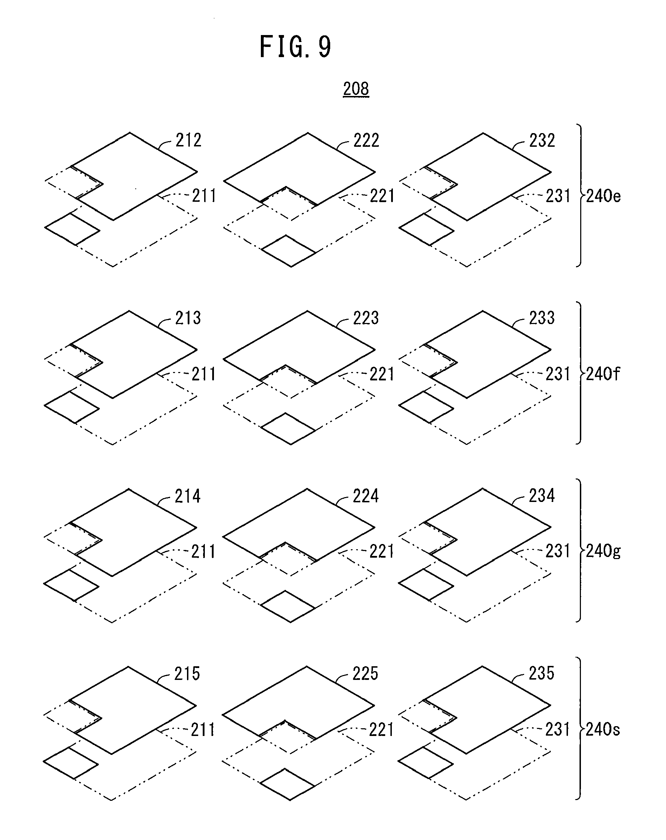

In step S6, the layer cluster definer 60 defines at least two layer clusters (in the present embodiment, four layer clusters) from among the combination of types of variable and fixed layers designated in step S5. The layer cluster definer 60 defines a reconstructed layer structure of the page description data Dp by adding various variable layers to at least one type of fixed layer. The reconstructed layer structure will be described below with reference to FIG. 9.

FIG. 9 shows page description data Dp, i.e., a layer structure 208, comprising four layer clusters 240e, 240f, 240g, 240s.

The layer cluster 240e is a page data group representing an English edition, produced by gathering variable layers "English" from respective pages. More specifically, the first page comprises a stack made up of the first layer 211 and the second layer 212. The second page comprises a stack made up of the first layer 221 and the second layer 222. The third page comprises a stack made up of the first layer 231 and the second layer 232.

The layer cluster 240f is a page data group representing a French edition, produced by gathering variable layers "French" from respective pages. More specifically, the first page comprises a stack made up of the first layer 211 and the third layer 213. The second page comprises a stack made up of the first layer 221 and the third layer 223. The third page comprises a stack made up of the first layer 231 and the third layer 233.

The layer cluster 240g is a page data group representing a German edition, produced by gathering variable layers "German" from respective pages. More specifically, the first page comprises a stack made up of the first layer 211 and the fourth layer 214. The second page comprises a stack made up of the first layer 221 and the fourth layer 224. The third page comprises a stack made up of the first layer 231 and the fourth layer 234.

The layer cluster 240s is a page data group representing a Spanish edition, produced by gathering variable layers "Spanish" from respective pages. More specifically, the first page comprises a stack made up of the first layer 211 and the fifth layer 215. The second page comprises a stack made up of the first layer 221 and the fifth layer 225. The third page comprises a stack made up of the first layer 231 and the fifth layer 235.

According to the present embodiment, the layer cluster definer 60 generates data with respect to a combination of layers (hereinafter referred to as "cluster data"). In view of the reconstructed layer structure 208 shown in FIG. 9, the layer cluster definer 60 may generate page description data depending on the layer clusters 240e, 240f, 240g, 240s from the single page description data Dp.

In step S7, the printing data generator 54 generates printing data for the respective layer clusters that were defined in step S6. The rasterizer 66 performs a rasterizing process on the page description data Dp based on various processing conditions including ICC profiles. In the rasterizing process, the rasterizer 66 refers to the cluster data, which is supplied from the layer cluster definer 60, in order to reconstruct raster-format image data, thereby producing the layer structure 208 shown in FIG. 9. For example, the rasterizer 66 can perform an existing rasterizing process by applying layer data depending on the fixed layer that serves as standard color plate data, i.e., C, M, Y, K plate data, and also by applying layer data that depends on variable data that serves as special plate data.

If respective page description data are generated in step S6 depending on the layer clusters 240e, 240f, 240g, 240s, the same results are obtained by successively performing four separate printing jobs.

In step S8, a proofreading and printing process is carried out. More specifically, the RIP 20 supplies generated printing data to the proof press 24 or the platesetter 28. At this time, the proof press 24 or the offset press 32 can produce a proof 22 or a print 30.

As described above, the RIP 20 includes the layer identifier 56, which identifies three or more types of layers, e.g., first through fifth layers 211 through 215 that are common to a plurality of pages represented by the page description data Dp, the layer designator 58, which designates at least two types of variable layers, e.g., the second through fifth layers 212 through 215, and at least one type of fixed layer, e.g., the first layer 211, from among three or more types of layers identified by the layer identifier 56, the layer cluster definer 60, which defines the same number of layer clusters 240e, 240f, 240g, 240s, which are made up of a plurality of pages, as the number of types of variable layers, by adding the variable layers to the at least one type of fixed layer designated by the layer designator 58, and the printing data generator 54, which generates printing data for each of the layer clusters defined by the layer cluster definer 60.

Since at least two types of layers and at least one type of layer are designated from among three or more types of layers, and the various layers are added to the designated at least one type of layer, thereby defining as many layer clusters, which are made up of a plurality of pages, as the number of types of variable layers, the layer cluster 240e, etc., in terms of each of productions that are assumed can automatically be produced depending on the manner in which variable and fixed layers are designated. The efficiency with which to edit page description data Dp having a layer function can thus be significantly increased.

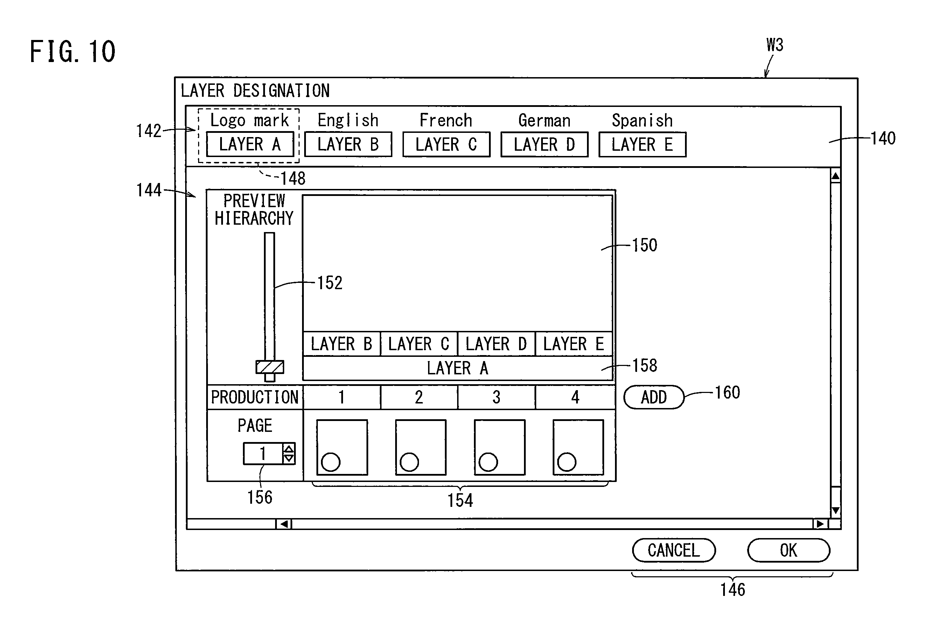

With the designating field 122 shown in FIG. 7, it is difficult to define a layer cluster having a complex combination of layers. In order to avoid such a difficulty, a graphic user interface may be constructed, which allows the operator to grasp the layer structure of each production at a glance. More specifically, in a case where the operator clicks on the button 98 (see FIG. 4), the image generator 64 generates a layer model image 150 and a plurality of thumbnail images 154, which are displayed (see FIG. 10).

The screen generator 62 generates display data for a designating screen 140, which includes the layer model image 150 and the thumbnail images 154. The designating screen 140 is different from the designating screen 120 (see FIG. 7). The screen generator 62 also supplies the generated display data to the display controller 40. The display controller 40 controls the display unit 42 to display a window W3 that includes the designating screen 140 therein.

As shown in FIG. 10, the designating screen 140 includes a first display field 142, a second display field 144, and a button group 146.

The first display field 142 displays block-like objects (hereinafter also referred to as "blocks") depending on the types of layers. Displayed content 148, for example, in the first display field 142 indicates that a block "layer A" corresponds to a layer "Logo mark". The objects are not limited to being in a rectangular shape, but may be of any shape insofar as the upper and lower sides thereof are essentially straight.

The second display field 144 displays a layer model image 150, a slide bar 152, a plurality of thumbnail images 154, and a spin box 156.

The layer model image 150 includes a stack of successive block-like objects, depending on the types of layers in one direction, i.e., a vertical direction in FIG. 10. In other words, the layer model image 150 represents a visible hierarchical structure of a layer cluster per production. In FIG. 10, four types of variable layers B through E, representing "English", "French", "German", and "Spanish" are stacked immediately above a layer A (lowest block 158), which represents a fixed layer "Logo mark". Thus, the structure of the layers 240e, 240f, 240g, 240s per production is arranged and made visible along a direction normal to the aforementioned one direction, e.g., in a horizontal direction as shown in FIG. 10.

The slide bar 152 is used to change the transmittance of the layers of the thumbnail images 154. In FIG. 10, the slide bar 152 is positioned in order to designate the block 158, thereby making the layer A and a hierarchical level therebeneath visible, while making layers B through E in a higher hierarchical level invisible (transparent).

In response to an action from an operator to move the slide bar 152 in order to designate one hierarchical level from within the hierarchical structure represented by the layer model image 150, the image generator 64 (FIG. 2) generates thumbnail images 154, which enable overlapping images to be visible in the designated hierarchical level and a hierarchical level therebeneath. In this manner, the second display field 144 makes each of the productions visible, which are divided into hierarchical levels, for the operator to operate with ease.

The spin box 156 is used to change page numbers of the thumbnail images 154 that are currently being displayed. The thumbnail images 154 illustrated in FIG. 10 indicate first pages with the logo area 202 positioned in the lower left corner of page area 200.

In a case where the operator clicks on the "ADD" button 160, which is positioned on the right side of the layer model image 150, the horizontal width of the overall layer model image 150 changes, thus making it possible to change the number of productions (four productions are shown in FIG. 10).

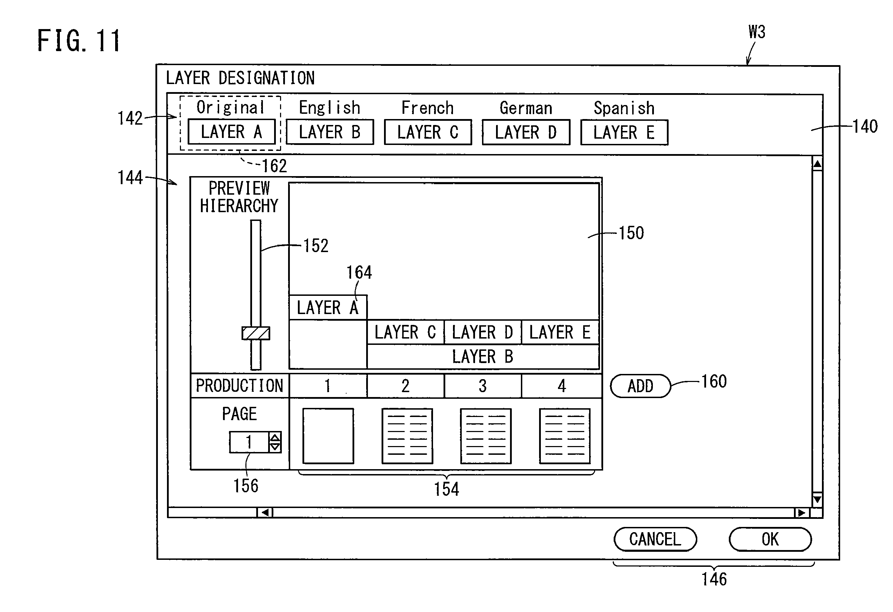

Another example of productions, which differ from those shown in FIGS. 5A through 6, will be described below with reference to FIG. 11. It is assumed that page description data Dp, which is to be processed according to a layer processing technique, includes a layout that is not divided into columns (original English text), and a layout that is divided into two columns (i.e., English text as shown in the left column, and a translation thereof as shown in the right column).

As shown in FIG. 11, displayed content 162 in the first display field 142 indicates that a block "layer A" corresponds to a layer "Original" (original English text).

The layer model image 150 shown in FIG. 11 provides a visible representation of a layer structure of each production. In FIG. 11, three types of variable layers C through E, which represent, respectively, "French", "German", and "Spanish" (content in the right column), are stacked immediately above a layer B, which represents a fixed layer "English" (content in the left column). A layer A (block 164) is displayed independently in a different position (upper left side of the layer C), which is not immediately above the layers B through E. In FIG. 11, the slide bar 152 is positioned in a manner to designate the layers C through E, thereby making the layers C through E and the layer B therebeneath visible, while the layer A in a higher hierarchical level is rendered invisible (transparent).

The operator can thus grasp the layer structure of each production easily and intuitively by visually recognizing the layer model image 150 (see FIGS. 10 and 11), which is representative of a stack of successive block-like objects (blocks 158, 164, etc.), depending on the types of layers along one direction.

## Claims

1. A data generating apparatus (20) for generating printing data from page description data (Dp), depending on a plurality of productions that share content information, comprising:
a layer identifier (56) for identifying three or more types of layers (211 through 215, 221 through 225, 231 through 235), which are common to a plurality of pages represented by the page description data (Dp);
a layer designator (58) for designating at least two types of variable layers (212 through 215, 222 through 225, 232 through 235) and at least one type of fixed layer (211, 221, 231) from among the three or more types of layers (211 through 215, 221 through 225, 231 through 235) identified by the layer identifier (56);
a layer cluster definer (60) for defining the same number of layer clusters (240e, 240f, 240g, 240s), which are made up of the plurality of pages, as the number of types of variable layers (212 through 215, 222 through 225, 232 through 235), by adding the variable layers (212 through 215, 222 through 225, 232 through 235) to the at least one type of fixed layer (211, 221, 231) designated by the layer designator (58); and
a printing data generator (54) for generating printing data for each of the layer clusters (240e, 240f, 240g, 240s) defined by the layer cluster definer (60).

2. The data generating apparatus (20) according to claim 1, further comprising:
an image generator (64) for generating a layer model image (150) for making visible a hierarchical structure of the layer clusters (240e, 240f, 240g, 240s) for each of the productions, by producing a stack, along one direction, of successive block-like objects (158, 164) depending on the types of the layers (211 through 215, 221 through 225, 231 through 235).

3. The data generating apparatus (20) according to claim 2, wherein the image generator (64) further generates thumbnail images (154), which make overlapping images visible in a hierarchical level and a hierarchical level therebeneath, in response to an action to designate a first hierarchical level within the hierarchical structure represented by the layer model image (150).

4. The data generating apparatus (20) according to claim 2, further comprising a display unit (42) for displaying the layer model image (150) generated by the image generator (64).

5. The data generating apparatus (20) according to claim 1, wherein the layer identifier (56) identifies types of the layers (211 through 215, 221 through 225, 231 through 235) based on a similarity of names of the layers (211 through 215, 221 through 225, 231 through 235).

6. The data generating apparatus (20) according to claim 1, wherein the layer identifier (56) identifies types of the layers (211 through 215, 221 through 225, 231 through 235) within a page range designated by a predetermined action among the plurality of pages.

7. The data generating apparatus (20) according to claim 1, wherein the layer designator (58) designates at least two types of layers, which are selected as the variable layers (212 through 215, 222 through 225, 232 through 235) in response to a predetermined action, and further designates at least one type of layer that is not selected, as the fixed layer (211, 221, 231).

8. A data generating method for generating printing data from page description data (Dp), depending on a plurality of productions that share content information, comprising the steps of:
identifying three or more types of layers (211 through 215, 221 through 225, 231 through 235), which are common to a plurality of pages represented by the page description data (Dp);
designating at least two types of variable layers (212 through 215, 222 through 225, 232 through 235) and at least one type of fixed layer (211, 221, 231) from among the identified three or more types of layers (211 through 215, 221 through 225, 231 through 235);
defining the same number of layer clusters (240e, 240f, 240g, 240s), which are made up of the plurality of pages, as the number of types of variable layers (212 through 215, 222 through 225, 232 through 235), by adding the variable layers (212 through 215, 222 through 225, 232 through 235) to the designated at least one type of fixed layer (211, 221, 231); and
generating printing data for each of the defined layer clusters (240e, 240f, 240g, 240s).

9. A non-transitory storage medium (48) storing therein a program for generating printing data from page description data (Dp), depending on a plurality of productions that share content information, the program enabling a computer (20) to carry out the steps of:
identifying three or more types of layers (211 through 215, 221 through 225, 231 through 235), which are common to a plurality of pages represented by the page description data (Dp);
designating at least two types of variable layers (212 through 215, 222 through 225, 232 through 235) and at least one type of fixed layer (211, 221, 231) from among the identified three or more types of layers (211 through 215, 221 through 225, 231 through 235);
defining the same number of layer clusters (240e, 240f, 240g, 240s), which are made up of the plurality of pages, as the number of types of variable layers (212 through 215, 222 through 225, 232 through 235), by adding the variable layers (212 through 215, 222 through 225, 232 through 235) to the designated at least one type of fixed layer (211, 221, 231); and
generating printing data for each of the defined layer clusters (240e, 240f, 240g, 240s).
